# EUROPEAN PATENT SPECIFICATION

(11) **EP 2 475 547 B1**
(45) Date of publication and mention of the grant of the patent: **09.05.2018**
(21) Application number: 10766351.0
(22) Date of filing: 08.09.2010
(51) Int. Cl.: B60N 2/28

(54) **CHILD SAFETY SEAT**
KINDERSICHERHEITSSITZ
SIÈGE DE SÉCURITÉ POUR ENFANT

(30) Priority: 09.09.2009 NO 20092986
(43) Date of publication of application: 18.07.2012
(73) Proprietor: HTS Hans Torgersen & Sønn AS, 3535 Krøderen (NO)
(72) Inventor: VAN MOURIK, Okke, NL-3514 BS Utrecht (NL); SMITS, Joyce, NL-1052 KC Amsterdam (NL); VAN DER VEER, Erik, NL-3533 AD Utrecht (NL)
(74) Representative: Onsagers AS
(86) International application number: PCT/NO2010/000330
(87) International publication number: WO 2011/031162

(56) References cited:
- EP-A1- 0 630 778
- EP-A1- 0 823 349
- EP-A1- 2 163 424
- WO-A1-2008/146695
- FR-A1- 2 671 770
- GB-A- 2 359 330
- JP-A- 2001 158 261
- JP-A- 2001 158 263
- US-B1- 6 428 099

## Description

The present invention relates to a child safety seat, and in particular to a child safety seat belt harness having means to simplify the use of the child safety seat.

In this connection, child safety seats for babies and younger children tend to be provided with a harness arrangement for restraining the baby or child in the child safety seat.

Child safety seats for use in automobiles and the like are well known, their use being guided by safety considerations and laws of the respective country. Such child safety seats take many forms, but a typical child safety seat has a seat body with side wall portions and a harness arrangement which comprises shoulder straps, each with a connectable buckle. The harness arrangement may also comprise a crotch member that is positioned on a central, forward portion of the child's seat for engagement with the two connectable buckles of the shoulder straps, to provide firm strapping for securing a child in the child safety seat. If the child safety seat is designated for infants, the child safety seat may also comprise a carrying handle of U-shape cross section, where the carrying handle goes over a central portion of the child seat, to permit carrying of the child safety seat.

The routing of the shoulder straps of the belt harness has developed over time to try to optimize both safety and ease of use. However, shoulder straps and/or crotch member of the belt harness resting loosely on the surface of the child seat when the child safety seat is not in use, is still a problem. Thus, when an infant or child is placed into the safety child seat, the infant or child ends up sitting on the shoulder straps of the belt harness. The parent or adult must then either remove the shoulder straps and or the crotch member of the belt harness before the child is placed into the child safety seat, or dig them out from underneath the infant or child after the infant or child has been placed in the child safety seat. First then can the shoulder straps be connected with the crotch member in order to secure the infant or child in the child safety seat. This represents an added inconvenience to the use of child safety seats.

US 5.061.012 describes a child car seat with automatic harness adjustment, where a crotch member is connected to a seat portion of the child seat and ends of two shoulder belts are connected to a side of a back support of the child seat, remote from the seat portion. The ends of the shoulder remote from the back support are each connected to a barrier that is pivotally connected to the back support of the child seat. When the child seat is not in use, the barrier is pivoted away from the seat portion. After the child has been placed in the child seat, the barrier is pivoted to a position in front of the child, in which position the shoulder belts extend over the child's shoulders. Subsequently, the crotch member is connected to the barrier, thus securing the child in the child seat. The shoulder belts are connected to an automatic belt retractor on a side remote from the barrier, in which retractor the shoulder belts are rolled up under the influence of a spring force and from which they can be pulled against spring force.

EP 1.623.891 describes a child seat and a belt system, where the child seat comprises a seat portion, a back support as well as at least one shoulder belt that can be connected to a crotch member for securing a child in the child seat. The shoulder belt can be moved against spring force by means of a spring element from a first position, in which the shoulder belt and the crotch member are disconnected, to a second position, in which the shoulder belt and the crotch member are connected. Since the shoulder belt is provided with a spring element, the shoulder belt will be held in the first position under the influence of spring force. In said position, the shoulder belt and the crotch member are spaced apart. However, the shoulder belt will still be in contact with or adjacent to the back support of the child seat in the first position, whereby the parent or adult must still move the shoulder belt aside before the child can be placed in the child seat.

An alternative child seat with a belt system is known from WO 2008/146695 A1.

The object of the present invention is to provide a child safety seat in which a child can be restrained by means of a safety seat belt harness, whilst placing the child into the child safety seat will be relatively easy.

The above is achieved by a child safety seat according to the independent claim 1, where alternative embodiments of the invention are defined in the dependent claims. The child safety seat according to the present invention is especially suitable for small children belonging to a group 0+. The term "0+" is used to categorize children having a body weight up to 13 kg. A child safety seat for this group will be placed facing backwards in the vehicle. However, the invention as described in this application may also apply to child safety seats for other groups of children, thus the child safety seat may also be placed in a forward facing position.

The child safety seat according to the present invention may be provided with belt guide unit(s) and fastening means for a vehicle safety seat belt (three point safety belt) and/or ISOFIX connector(s), in order to secure the child safety seat to a vehicle seat.

According to the present invention a child safety seat comprises a base portion integrated in a child seat portion having a back section and a seat section, where the back section and seat section have opposed side walls. Furthermore, the child safety seat comprises a safety harness arrangement, where the arrangement includes a pair of shoulder strap portions and a crotch member arranged in a forward part of the seat section. The shoulder strap portions may be arranged in many ways, but in a preferred embodiment the shoulder strap portions extend downwardly from apertures in the back section and then diverge sideways at side portions to attach with respective lower side portions of the seat section. A pair of shoulder strap sleeves are connected and fixed to the apertures in the back section, such that the shoulder strap portions extend through the sleeves and are slidable through the sleeves. Each of the shoulder strap sleeves is provided with fastening means. The fastening means of the shoulder strap sleeves will cooperate with corresponding fastening means on the child safety seat, arranged in the side walls of the back section.

However, it should also be understood that the fastening means of the child safety seat could be arranged in the side walls of the seat section.

The fastening means can be constituted of at least one pair of magnets, at least one pair of magnets and metal plates, Velcro strips, press studs etc. The fastening means may be fastened or attached to the shoulder strap sleeves and the side walls in different ways, for instance by gluing, by sewing into the fabrics, by integration etc. Furthermore, the fastening means may be arranged permanently or temporarily on the shoulder strap sleeves and/or side walls.

In a preferred embodiment of the present invention the shoulder strap sleeves are provided with at least one metal plate, where the metal plate is sewn in into the fabric. The side walls of the back section or seat section are provided with at least one magnet. The magnet may also be sewn into the fabric.

The fastening means arranged in the shoulder strap sleeves and/or side walls may be indicated, for instance, by a mark or the like on the fabric, in order to indicate where the fastening means are arranged. This will indicate where the fastening means portions of the sleeves and the side walls are arranged, and thereby ease the connection of the shoulder strap sleeves to the side walls.

The child safety seat according to the present invention may also be constituted of additional or fewer sections, the base portion may be releasable connected to the child seat portion etc.

Each of the shoulder strap portions is provided with a slidable buckle, where the buckle comprises a buckle tongue which can be interlocked with a buckle lock on the crotch member.

In order to limit the movement of the buckle towards the seat section of the child safety seat, a rivet is fastened to the lower part of the shoulder strap portion.

In a preferred embodiment of the present invention the crotch member, containing a buckle lock, is at least partly covered by a fabric sleeve. The fabric sleeve may be fastened to the seat section of the child safety seat. In order to prevent the crotch member ending up underneath the child, the fabric sleeve is provided with a nylon cord, so that the crotch member is forced towards the end of the seat section of the child safety seat, in a forward position. This will prevent the crotch member from ending up on the part of the seat section that the infant or child is to sit on. The nylon cord may be arranged partly or completely around the circumference of the fabric sleeve and into the seat section.

However, it should be understood that the fabric sleeve can also be provided with a Velcro strip, press stud(s) etc., so that the fabric sleeve can be fastened and secured to the seat section.

The shoulder strap portions and the crotch member may be connected to each other through an adjustable strap, thereby allowing the safety harness arrangement to be tightened.

The foregoing and other features of the present invention will become apparent to one skilled in the art to which the present invention relates upon consideration of the following description of the invention with reference to the accompanying drawings, wherein:
Figure 1 shows a child safety seat with a safety belt harness arrangement according to prior art,
Figure 2 shows a child safety seat with a safety belt harness arrangement according to the present invention,
Figure 3 shows in greater detail a fastening system for the safety belt harness,
Figure 4 shows the safety belt harness in a connected state, and
Figure 5 shows in greater detail a crotch member of the safety belt harness according to the present invention.

In the following it should be understood that a child safety seat mounted in a vehicle in a forward facing position refers to a position where the child will face forward in the normal driving direction of the vehicle, while the child in a rearward facing position will face opposite the normal driving direction of the vehicle.

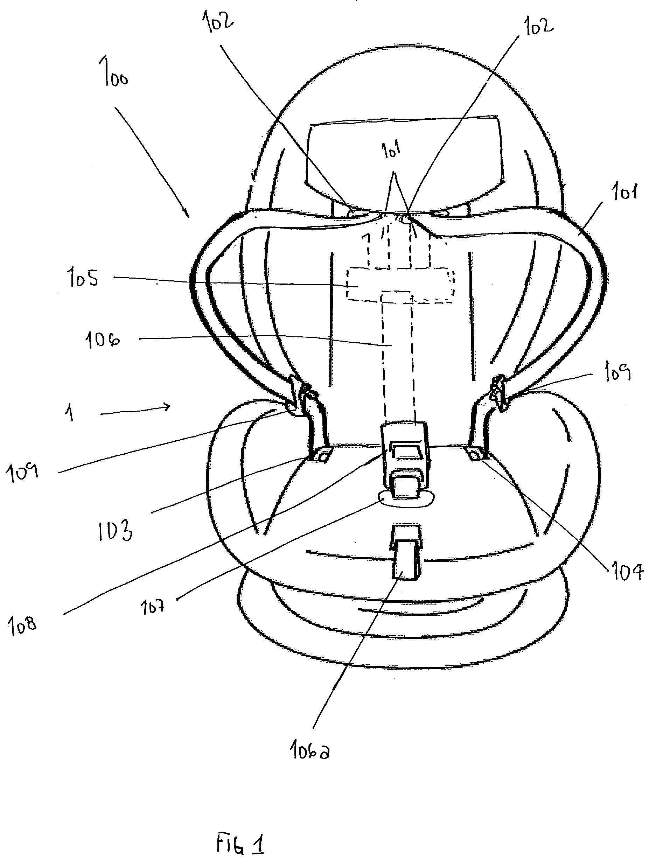

A typical prior art safety belt harness arrangement 100 is shown in figure 1 and shows how shoulder straps 101 of the safety harness arrangement 100 extend downwardly from upper apertures 102 in a child safety seat 1, are conveyed and guided through a buckle 109 and then diverge sideways at side portions to attach with respective lower side portions 103, 104 of the child safety seat 1. Shoulder straps 101 are pulled outwards in order to show how the different straps of the safety belt harness are arranged.

At the upper end of the safety harness arrangement 100, the shoulder straps 101 pass through their respective apertures 102 to run down the back of the child safety seat 1, where they engage with a cross member 105. The cross member 105 is in turn coupled to a strap 106 which runs further down the back of the child safety seat 1 and then under the seat to surface, through an aperture 107 having a crotch buckle 108, in the front of the base of the child safety seat 1.

When the safety harness arrangement 100 is to be used in order to restrain a child in the child safety seat 1, the shoulder straps 101 must be pushed aside (as they are laying loosely in a seat section of the child safety seat 1), whereby the child is placed in the child safety seat 1. The buckles 109 of the shoulder straps 101 must then be connected with the crotch buckle 108 in order to fasten the safety belt harness 100 together. A free end 106a of the strap 106 is then used to draw the cross member 105 down, thereby pulling the shoulder straps 101 and buckles 108 into the child safety seat to tighten the safety harness arrangement 100.

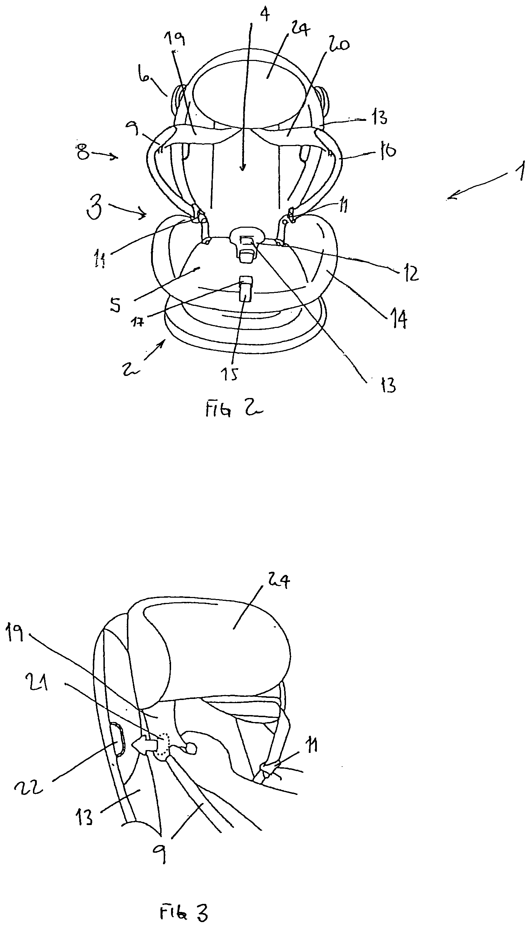

Figure 2 shows a child safety seat 1 according to the present invention, where the child safety seat 1 is intended to be used in both a forward-facing direction and a rearward-facing direction of a vehicle's normal driving direction.

The child safety seat 1 comprises a base portion 2 which is integrated in a child seat portion 3, the child seat portion 3 being constituted of a back section 4 and a seat section 5. The back section 4 is bound by side support walls 13, while the seat section 5 is bound by armrests 14 on both longitudinal sides.

Furthermore, an adjustable head rest 24 is arranged in the back section 4.

A safety harness arrangement 8 comprises opposing shoulder strap portions 9, 10 and a crotch member 12. The shoulder strap portions 9, 10 are each connected to the child seat portion 3 with one end at transition between the back section 4, seat section 5 and armrests 14. Opposite ends of the shoulder strap portions 9, 10 extend through apertures (not shown, covered by the adjustable head rest 24) in the back section 4 and are adjustable in length on a rear side of the back section 4. The shoulder straps portions 9, 10 are in an appropriate way connected with an adjustable strap 15. Each of the shoulder strap portions 9, 10 are provided with a slidable buckle 11. The buckle 11 comprises a buckle tongue which can be interlocked with a buckle lock 13 of the crotch member 12.

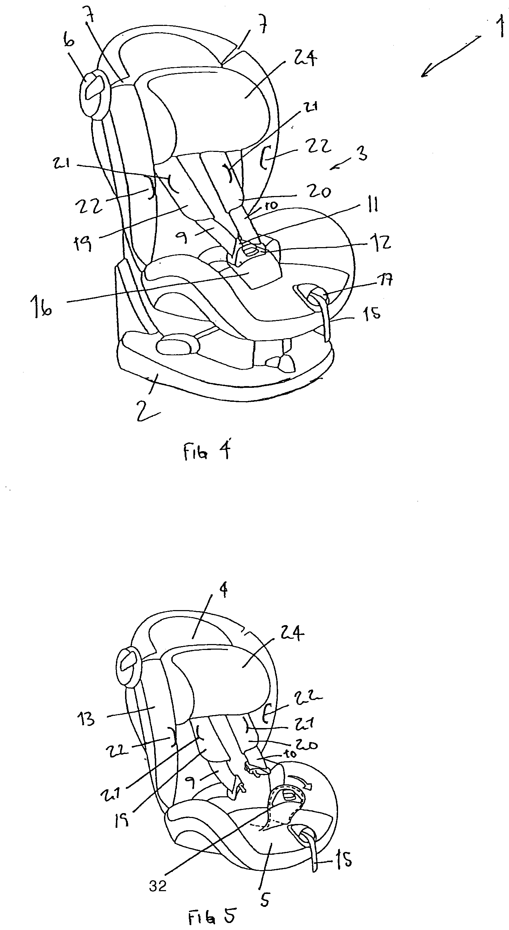

The crotch member 12 is arranged centrally in the seat section 5 and is constituted of the adjustable strap 15 connected to the buckle lock 13. The crotch member 12 is slidably arranged in a fabric sleeve 16, which is connected to the seat section 5. The fabric sleeve 16 will at least partly cover the crotch member 12. In order to prevent the child from sitting on the crotch member 12 when the safety harness arrangement 8 is not in use, the fabric sleeve 16 is around its circumference provided with resilient or flexible nylon cord 32 (see figure 5), where the nylon cord 32 also will extend a certain distance into the seat section 5. As the nylon cord 32 is resilient, the fabric sleeve 16 and the crotch member 12 will be pushed forward towards the end of the seat section 5. In this way the crotch member 12 will be bent forwards and thus covered by the fabric sleeve 16.

A loose end of the adjustable strap 15 extends through an aperture 17 in front of the seat section 5.

A pair of shoulder strap sleeves 19, 20 is connected and fixed to apertures in the back section 4, such that shoulder strap portions 9, 10 extend through shoulder strap sleeves 19, 20. The shoulder strap portions 9, 10 can slide through the shoulder strap sleeves 19, 20. Each of the sleeves 19, 20 are furthermore provided with fastening means 21, in the form of at least one metal plate or magnet, where corresponding fastening means 22 are provided in the side support walls 13 of the back section 4.

As the child safety seat 1 according to the present invention is intended to be used in both a forward facing and a backward facing direction, the child safety seat 1 is provided with a fastening arrangement in order to secure the child safety seat 1 to a vehicle seat. The fastening arrangement can be safety belt guide unit(s) 6, and/or guiding slot(s) 7 for a vehicle safety belt, ISOFIX connectors (not shown) or a combination of the above.

As shown in figure 3, when the shoulder strap portions 9, 10, through the fastening means 21, 22, are connected to the side support walls 13, a child can be placed on the seat section 5 without any difficulty, as the shoulder strap portions 9, 10 are removed from the part of the back section 4 and seat section 5 that the child's back will abut when placed in the child safety seat 1.

After the child is placed in the child safety seat 1, the user (for instance a parent or an adult) will guide the child's arms through the shoulder strap portions 9, 10, whereafter the user will collect the buckle tongues of the buckles 11 and guide them towards the crotch member 12, such that the buckle tongues can be inserted into the buckle lock 13 and be interlocked therewith. However, as the shoulder strap portions 9, 10 are attached to the side support walls 13 of the back section 4, the shoulder strap portions 9, 10 needs to be tightened accordingly. This is done by pulling the adjustable strap 15 of the crotch member 12, whereby the shoulder strap portions 9, 10 are tightened. The tightening of the shoulder strap portions 9, 10 will also result in that the shoulder strap sleeves 19, 20 will be pulled loose from the side support walls 13, whereby the safety harness arrangement 8 is tightened correctly around the child.

Figure 3 shows how the shoulder strap sleeves 19, 20 are connected through the fastening means 21 with corresponding fastening means 22 in the side support walls 13. This arrangement will remove the shoulder strap portions 9, 10 away from the part of the back section 4 and seat section 5 so that the child's back will only abut the back section 4 and seat section 5 when placed in the child safety seat 1.

Figure 4 shows the safety harness arrangement 8 in a tightened state, where the shoulder strap sleeves 19, 20 have been removed out of engagement with the side support walls 13, as the adjustable strap 15 that is connected to the shoulder strap portions 9, 10 and crotch member 12 has been pulled in order to tighten the shoulder strap portions 9, 10 of the safety harness arrangement 8.

In figure 5 the crotch member 12 is shown in greater detail, and it can be seen that the crotch member 12 is partly covered by the fabric sleeve 16. The fabric sleeve 16 is connected to the seat section 5 in an appropriate way and is provided with a flexible or resilient nylon cord 22 around its circumference. The resilient nylon cord 22 will extend a certain distance into the seat section 5. As the resilient nylon cord 22 has a springy or resilient property, the crotch member 12 will be forced towards the adjustable strap 15, thereby preventing the crotch member 12 from lying "loose" in the seat section 5.

Although the present invention has been described and illustrated in detail, it is to be clearly understood that the same is by way of illustration and example only, and is not to be taken by way of limitation. The present invention is limited only by the scope of the appended claims.

## Claims

1. A child safety seat (1) for use in a vehicle, the child safety seat (1) comprising a base portion (2) and child seat portion (3) having a back section (4) and a seat section (5), the back section (4) and seat section (5) having opposing side walls (13, 14), a safety harness arrangement (8) for a child occupant secured to the child seat portion (3), the safety harness arrangement (8) including a pair of shoulder strap portions (9, 10) extending through respective apertures in the back section (4) and a crotch member (12) arranged in a forward part of the seat section (5), **characterized in that** a pair of shoulder strap sleeves (19, 20) are arranged and fixed to the apertures in the back section (4), through which shoulder strap sleeves (19, 20) shoulder strap portions (9, 10) extend, where the shoulder strap sleeves (19, 20) are provided with fastening means (21), the fastening means (21) of the shoulder strap sleeves (19, 20) cooperating with corresponding fastening means (22) arranged in the side walls (13) of the back section (4).

2. A child safety seat according to claim 1, **characterized in that** the fastening means (21) of the shoulder strap sleeves (19, 20) and side walls (13) are comprised of one or more magnets and metal plates, Velcro strips, press studs etc.

3. A child safety seat according to claim 2, **characterized in that** the shoulder strap sleeves (19, 20) are provided with at least one metal plate, while the side walls (13) are provided with at least one magnet.

4. A child safety seat according to claim 1, **characterized in that** a rivet is arranged in the lower part of the shoulder strap portion (9, 10), thereby limiting movement of a buckle towards the seat section (5) of the child safety seat (1).

5. A child safety seat according to claim 1, **characterized in that** the crotch member (12), containing a strap (15) and a belt buckle, is at least partly covered by a fabric sleeve (16).

6. A child safety seat according to claim 5, **characterized in that** the fabric sleeve (16) is provided with a resilient nylon cord at least partly around its outer circumference.

7. A child safety seat according to claim 1, **characterized in that** a head rest (24) is adjustable in the vertical direction of the child safety seat (1).

8. A child safety seat according to claim 1, **characterized in that** the fastening means (21, 22) on the shoulder strap sleeves (19, 20) and side walls (13) are indicated by a mark.

9. A child safety seat according to claim 1, **characterized in that** the shoulder strap portions (19, 20) and the crotch member (12) are connected through an adjustable strap (15).

10. A child safety seat according to claim 1, **characterized in that** the back section (4) is provided with at least one belt guide unit (6) and/or guiding slots (7) for a vehicle safety belt.

## Patentansprüche

1. Kindersicherheitssitz (1) zur Verwendung in einem Fahrzeug, wobei der Kindersicherheitssitz (1) ein Basisteil (2) und ein Kindersitzteil (3) mit einem Rückenabschnitt (4) und einem Sitzabschnitt (5), wobei der Rückenabschnitt (4) und der Sitzabschnitt (5) gegenüberliegende Seitenwände (13, 14) aufweisen, eine Sicherheitsgurtanordnung (8) für einen Kindinsassen aufweist, die am Kindersitzteil (3) befestigt ist, wobei die Sicherheitsgurtanordnung (8) über ein Paar Schultergurtteile (9, 10), die sich durch jeweilige Öffnungen im Rückenabschnitt (4) erstrecken, und über ein Schrittelement (12) verfügt, das in einem vorderen Teil des Sitzabschnitts (5) angeordnet ist, **dadurch gekennzeichnet, dass** ein Paar Schultergurthüllen (19, 20) an den Öffnungen im Rückenabschnitt (4) angeordnet und befestigt sind, durch welche Schultergurthüllen (19, 20) sich Schultergurtteile (9, 10) erstrecken, wobei die Schultergurthüllen (19, 20) mit Befestigungsmittel (21) versehen sind, wobei die Befestigungsmittel (21) der Schultergurthüllen (19, 20) mit entsprechenden Befestigungsmittel (22) zusammenwirken, die in den Seitenwänden (13) des Rückenabschnitts (4) angeordnet sind.

2. Kindersicherheitssitz nach Anspruch 1, **dadurch gekennzeichnet, dass** die Befestigungsmittel (21) der Schultergurthüllen (19, 20) und Seitenwände (13) aus einem oder mehreren Magneten und Metallplatten, Klettbändern, Druckknöpfen, etc. bestehen.

3. Kindersicherheitssitz nach Anspruch 2, **dadurch gekennzeichnet, dass** die Schultergurthüllen (19, 20) mit mindestens einer Metallplatte versehen sind, wobei die Seitenwände (13) mit mindestens einem Magneten versehen sind.

4. Kindersicherheitssitz nach Anspruch 1, **dadurch gekennzeichnet, dass** ein Niet im unteren Teil des Schultergurtteils (9, 10) angeordnet ist, wodurch eine Bewegung einer Schließe zum Sitzabschnitt (5) des Kindersicherheitssitzes (1) hin eingeschränkt wird.

5. Kindersicherheitssitz nach Anspruch 1, **dadurch gekennzeichnet, dass** das Schrittelement (12), das einen Gurt (15) und eine Gurtschließe enthält, zumindest teilweise mit einer Gewebehülle (16) bedeckt ist.

6. Kindersicherheitssitz nach Anspruch 5, **dadurch gekennzeichnet, dass** die Gewebehülle (16) zumindest teilweise um ihren Außenumfang herum mit einer elastischen Nylonschnur versehen ist.

7. Kindersicherheitssitz nach Anspruch 1, **dadurch gekennzeichnet, dass** eine Kopfstütze (24) in der vertikalen Richtung des Kindersicherheitssitzes (1) einstellbar ist.

8. Kindersicherheitssitz nach Anspruch 1, **dadurch gekennzeichnet, dass** die Befestigungseinrichtungen (21, 22) an den Schultergurthüllen (19, 20) und Seitenwänden (13) durch eine Markierung angezeigt sind.

9. Kindersicherheitssitz nach Anspruch 1, **dadurch gekennzeichnet, dass** die Schultergurtteile (19, 20) und das Schrittelement (12) über einen einstellbaren Gurt (15) verbunden sind.

10. Kindersicherheitssitz nach Anspruch 1, **dadurch gekennzeichnet, dass** der Rückenabschnitt (4) mit mindestens einer Gurtführungseinheit (6) und/oder Führungsschlitzen (7) für einen Fahrzeugsicherheitsgurt versehen ist.

## Revendications

1. Siège de sécurité pour enfant (1) destiné à être utilisé dans un véhicule, le siège de sécurité pour enfant (1) comprenant une partie de base (2) et une partie de siège pour enfant (3) ayant une section de dossier (4) et une section d'assise (5), la section de dossier (4) et la section d'assise (5) ayant des parois latérales opposées (13, 14) et un agencement de harnais de sécurité (8) pour un enfant attaché sur la partie de siège pour enfant (3), l'agencement de harnais de sécurité (8) comprenant une paire de parties de sangles d'épaule (9, 10) s'étendant à travers des ouvertures respectives dans la section de dossier (4) et un élément d'entrejambes (12) agencé dans une partie avant de la section d'assise (5), **caractérisé en ce qu'**une paire de manchons de sangle d'épaule (19, 20) sont agencés et fixés sur les ouvertures dans la section de dossier (4), à travers lesquels manchons de sangle d'épaule (19, 20), s'étendent des parties de sangle d'épaule (9, 10), où les manchons de sangle d'épaule (19, 20) sont prévus avec des moyens de fixation (21), les moyens de fixation (21) des manchons de sangle d'épaule (19, 20) coopérant avec des moyens de fixation (22) correspondants agencés dans les parois latérales (13) de la section de dossier (4).

2. Siège de sécurité pour enfant selon la revendication 1, **caractérisé en ce que** les moyens de fixation (21) des manchons de sangle d'épaule (19, 20) et les parois latérales (13) sont composés d'un ou de plusieurs aimants et plaques métalliques, de bandes Velcro et de boutons pression, etc.

3. Siège de sécurité pour enfant selon la revendication 2, **caractérisé en ce que** les manchons de sangle d'épaule (19, 20) sont prévus avec au moins une plaque métallique, alors que les parois latérales (13) sont prévues avec au moins un aimant.

4. Siège de sécurité pour enfant selon la revendication 1, **caractérisé en ce qu'**un rivet est agencé dans la partie inférieure de la partie de sangle d'épaule (9, 10), limitant ainsi le mouvement d'une sangle vers la section d'assise (5) du siège de sécurité pour enfant (1).

5. Siège de sécurité pour enfant selon la revendication 1, **caractérisé en ce que** l'élément d'entrejambes (12), contenant une sangle (15) et une boucle de ceinture, est au moins partiellement recouvert par un manchon en tissu (16).

6. Siège de sécurité pour enfant selon la revendication 5, **caractérisé en ce que** le manchon en tissu (16) est prévu avec un cordon en nylon résilient au moins partiellement autour de sa circonférence externe.

7. Siège de sécurité pour enfant selon la revendication 1, **caractérisé en ce qu'**un appui-tête (24) est réglable dans la direction verticale du siège de sécurité pour enfant (1).

8. Siège de sécurité pour enfant selon la revendication 1, **caractérisé en ce que** les moyens de fixation (21, 22) sur les manchons de sangle d'épaule (19, 20) et les parois latérales (13) sont indiqués par une marque.

9. Siège de sécurité pour enfant selon la revendication 1, **caractérisé en ce que** les parties de sangle d'épaule (19, 20) et l'élément d'entrejambes (12) sont raccordés par une sangle réglable (15).

10. Siège de sécurité pour enfant selon la revendication 1, **caractérisé en ce que** la section de dossier (4) est prévue avec au moins une unité de guidage de ceinture (6) et/ou des fentes de guidage (7) pour une ceinture de sécurité de véhicule.
